# EUROPÄISCHE PATENTSCHRIFT

(11) **EP 3 993 982 B1**
(45) Veröffentlichungstag und Bekanntmachung des Hinweises auf die Patenterteilung: **25.01.2023**
(21) Anmeldenummer: 20733752.8
(22) Anmeldetag: 17.06.2020
(51) Int. Cl.: B29C 45/16, G02B 7/02, G03B 17/08

(54) **VERFAHREN ZUM SPRITZGIESSEN EINES OBKJEKTIVGEHÄUSES FÜR KAMERAS**
PROCESS FOR INJECTION MOULDING A LENS HOUSING FOR CAMERAS
PROCÉDÉ DE MOULAGE PAR INJECTION D'UN OBJECTIF DE LA CAMÉRA

(30) Priorität: 03.07.2019 DE 102019209764
(43) Veröffentlichungstag der Anmeldung: 11.05.2022
(73) Patentinhaber: Robert Bosch GmbH, 70442 Stuttgart (DE)
(72) Erfinder: GEISE, Stephan, 59602 Ruethen (DE)
(86) Internationale Anmeldenummer: PCT/EP2020/066763
(87) Internationale Veröffentlichungsnummer: WO 2021/001151

(56) Entgegenhaltungen:
- WO-A1-2009/047868
- DE-A1-102015 213 575
- KR-U- 20110 001 228
- US-A1- 2011 069 198

## Beschreibung

### Technisches Gebiet

Die Erfindung bezieht sich auf ein Verfahren zur Herstellung eines Kameragehäuses mit einer geschichteten Anordnung aus Linsenelementen und dessen Verwendung.

### Stand der Technik

In Fahrzeugen werden Kameraobjektive verwendet, die aus mehreren Glas- oder Kunststofflinsenelementen mit entsprechenden Abstandsringen und Luftzwischenräumen beispielsweise für die Farbkorrektur aufgebaut sind. Mit der obersten Linse wird das Linsenpaket am Objektivgehäuse fixiert. Ein derartiger Aufbau geht beispielsweise aus der DE 10 2009 056 658 A1 hervor. Weitere Kameragehäuse mit in einer Schichtanordnung angeordneten Linsenelementen sind aus den Dokumenten US 2011/069198, KR 2011 0001228 und WO 2009/047868 bekannt.

Aus DE 10 2015 213 575 A1 ist bekannt, Linsen direkt in ein aus duroplastischem Material gefertigtes Kameragehäuse einzukleben und eine Abschlusslinse ebenfalls mittels einer Kleberaupe zu befestigen. Da die Kunststoffe des Gehäuses sowie des Klebstoffs vernetzt sind, haben diese einen vergleichbaren Ausdehnungskoeffizienten. In den Linsenzwischenräumen befindet sich jedoch Luft, die bei der Montage oder beim Auftreten von Undichtigkeiten am Objektiv mit Verunreinigung kontaminiert werden kann und somit zur Störung des Kamerabilds führen könnte.

Aus DE 10 2011 054 072 B4 geht eine kompakte Linsenhalterung für eine Flüssiglinse hervor, die durch Anlegen einer Spannung unterschiedliche Brennweiten der Linse ermöglicht. Mögliche Verunreinigungen wirbeln auch gemäß dieser Lösung unkontrolliert umher und können das Bild, welches die Kamera liefert, beeinträchtigen.

### Darstellung der Erfindung

Erfindungsgemäß wird ein Verfahren zur Herstellung eines Kameragehäuses mit in einer Schichtanordnung angeordneten Linsenelementen mit nachfolgenden Verfahrensschritten vorgeschlagen:
a) Abformung mindestens eines Kameragehäuses in einem ersten Mehrkavitätenspritzgießwerkzeug,
b) Einsetzen der gemäß Verfahrensschritt a) erhaltenen Kameragehäuse in Kavitäten eines weiteren UV-Spritzgießwerkzeugs und Anlegen eines Vakuums an die Kavitäten,
c) Einlegen von Linsenelementen in die Kameragehäuse und deren Fixieren mittels des anliegenden Vakuums,
d) Einspritzen eines fließfähigen, niedrigviskosen UV-vernetzenden Kunststoffs in Luftzwischenräume der mit den Linsenelementen bestückten Kameragehäuse und
e) Einschalten von UV-Lichtquellen zur Aushärtung des die Luftzwischenräume ausfüllenden UV-vernetzenden Kunststoffs.

Durch die erfindungsgemäß vorgeschlagene Lösung kann ein separates Objektivgehäuse eingespart werden und insbesondere lassen sich durch das Verfüllen von Luftzwischenräumen, die sich zwischen den Linsenelementen ergeben, Verunreinigungen dort vermeiden, welche zu Beeinträchtigungen von Kamerabildern führen können.

In weiterer Ausgestaltung des erfindungsgemäß vorgeschlagenen Verfahrens werden gemäß Verfahrensschritt a) in den Kameragehäusen Linsenaufnahmen hochgenau abgeformt, die zur Aufnahme der Linsenelemente dienen.

In weiterer Ausgestaltung des erfindungsgemäß vorgeschlagenen Verfahrens kann als Kunststoffmaterial für die Abformung der Kameragehäuse ein mit wärmeleitfähigen Partikeln gefüllter Thermoplast, ein mit wärmeleitfähigen Partikeln gefüllter Duroplast oder gegossenes Metall eingesetzt werden.

In einer weiteren Ausgestaltung des erfindungsgemäß vorgeschlagenen Verfahrens werden gemäß Verfahrensschritt a) in den Kameragehäusen Anschnitte geformt, die eine Befüllung von Luftzwischenräumen mit UV-vernetzendem Kunststoff gemäß Verfahrensschritt d) ermöglichen. Die Anschnitte bewirken ein Fließen des niedrigviskosen fließfähigen UV-vernetzenden Materials nach vollständiger Befüllung eines Luftzwischenraums in den jeweils darunter liegenden Luftzwischenraum.

Beim erfindungsgemäß vorgeschlagenen Verfahren können die Linsenelemente konkav oder konvex ausgeformt sein.

In Weiterbildung des erfindungsgemäß vorgeschlagenen Verfahrens werden die jeweils eingesetzten Linsenelemente aus Cycloolefin-Copolymeren (COC) oder Cycloolefin-Polymeren (COP) insbesondere mit einem Brechungsindex von n = 1,53 oder aus einem Polycarbonat (PC) insbesondere mit einem Brechungsindex von n = 1,58 hergestellt. Als weitere Linsenwerkstoffe seien Polymethylmethacrylat, Glas oder Silikon genannt.

In Weiterentwicklung des erfindungsgemäß vorgeschlagenen Verfahrens wird gemäß Verfahrensschritt d) als UV-vernetzender Kunststoff ein optischer Kunststoff eingesetzt, insbesondere ein UV-vernetzendes Acryl- oder Epoxidharz, vorzugsweise mit einem Brechungsindex von n = 1,26, oder auch Silikon. In einer vorteilhaften Ausgestaltung des erfindungsgemäß vorgeschlagenen Verfahrens wird über einen Dosierkanal in einer Werkzeugebene des UV-Spritzgießwerkzeugs der UV-vernetzende Kunststoff zuerst in einen Luftzwischenraum unterhalb des ersten Linsenelements eingespritzt und gelangt von dort über Anschnitte in weitere Luftzwischenräume des mit den Linsenelementen bestückten Kameragehäuses.

Beim erfindungsgemäß vorgeschlagenen Verfahren erfolgt gemäß Verfahrensschritt e) die Aushärtung des UV-vernetzenden Kunststoffs ausgehend von den UV-Lichtquellen über transparente Formeinsätze, die in das UV-Spritzgießwerkzeug eingesetzt sind.

Darüber hinaus bezieht sich die Erfindung auf die Verwendung des Verfahrens zur Herstellung eines Kameragehäuses mit in Schichtanordnung vorgesehenen Linsenelementen für Kameras, die im Innenbereich oder im Außenbereich von Fahrzeugen eingesetzt werden.

### Vorteile der Erfindung

Durch das erfindungsgemäß vorgeschlagene Verfahren für eine temperaturneutrale Herstellung von Kameragehäusen, kann in kurzer Fertigungszeit ein kostengünstiges und kompakt aufgebautes Paket aus Linsenelementen für ein Kamerasystem für den Innen- oder den Außenbereich von Fahrzeugen hergestellt werden. Wie beim Prinzip der Flüssiglinse werden mit dem Spritzgießverfahren in einem UV-Spritzgießwerkzeug die Linsenzwischenräume mit einem optischen Kunststoff, besagtem UV-vernetzenden Kunststoffmaterial, gefüllt und die Luft aus den Zwischenräumen verdrängt. Gleichzeitig werden beim Einspritzen des niedrigviskosen fließfähigen UV-vernetzenden Kunststoffs eventuell in den Luftzwischenräumen vorhandene Partikel herausgespült oder an den Rand gespült und das Eindringen neuer Verunreinigungen oder kondensierender Flüssigkeit bei Temperaturwechseln verhindert. Die Zwischenräume, die sich zwischen den einzelnen Linsenelementen innerhalb des Kameragehäuses befinden, bleiben dauerhaft vom UV-vernetzenden Kunststoffmaterial befüllt, sodass kein Raum für das Eindringen von kontaminierenden Elementen, seien es Partikel, sei es Flüssigkeit, ist.

Dadurch wird das unerwünschte Streulicht im Objektiv reduziert. Im Gegensatz zu Flüssiglinsen ist die optische Füllung durch das UV-vernetzende Kunststoffmaterial soweit fest, dass es infolge möglicher ungleichmäßiger Erwärmung beispielsweise durch Wärmequellen oder durch Strahlungswärme bei Beleuchtung nicht zu Konvektionsströmungen, d. h. Schlierenbildung, kommt. Dies bedeutet, dass die Qualität der optischen Abbildung des Kamerasystems nicht beeinträchtigt wird. Ebenfalls werden durch die reine UV-Aushärtung des UV-vernetzenden Kunststoffmaterials die thermischen Ausdehnungseffekte und damit Lufteinschlüsse oder Ablösungen in den vorhandenen Grenzschichten verhindert oder signifikant minimiert.

Die kostengünstig herstellbaren Kunststofflinsenelemente werden vor der Befüllung der Kavität durch ein Vakuum in Ihren vorher hochgenau abgeformten Halterungspositionen innerhalb der Kameragehäuse fixiert und durch das an den Kavitäten jeweils anliegende Vakuum dauerhaft in Ihrer Position, insbesondere während der Befüllung dort, gehalten, sodass definierte Linsenelementpositionen eingehalten und beibehalten werden können.

Bei dem optischen Kunststoff handelt es sich insbesondere um besagten UV-vernetzenden Kunststoff, der durch UV-Strahlung, für die die kostengünstigen Kunststofflinsenelemente durchlässig sind, aushärtet. Somit kann mit spezieller optischer Berechnung die Anzahl der Linsenelemente beispielsweise für die Farbkorrektur signifikant verringert und des Weiteren die Bauhöhe des Kameragehäuses erheblich verkleinert werden. Durch den dadurch erzielbaren reduzierten Bauraumbedarf können zusätzliche Einbaupositionen für die Kameras möglich werden, die mit einem aktuellen Aufbau von Kameras bisher nicht ausgewählt werden konnten. Neben geringem Gewicht lassen sich gute Haftungseigenschaften zwischen Kunststoffgehäuse, Kunststofflinsen und Kunststoffzwischenschichten erreichen.

### Kurze Beschreibung der Zeichnung

Anhand der Zeichnung wird die Erfindung nachstehend eingehender beschrieben.

Es zeigt:
- Figur 1: eine aktuelle Kamerabaugruppe aus dem Stand der Technik,
- Figur 2: eine Prinzipskizze des Spritzgießwerkzeugs zur Herstellung der Kameragehäuse,
- Figur 3: entformte Kameragehäuse durch einen Anguss miteinander verbunden,
- Figur 4: einen bestückten Optikträger,
- Figur 4.1: die Darstellung eines ersten Linsenelements mit Klebefixierung,
- Figur 4.2: die Darstellung eines zweiten Linsenelements,
- Figur 4.3: die Darstellung eines dritten Linsenelements des bestückten Optikträgers gemäß Figur 4 und
- Figur 5: die Prinzipskizze eines UV-Spritzgießwerkzeugs mit mehreren Werkzeugebenen und in Kavitäten eingesetzte bestückte Kameragehäuse gemäß Figur 4.

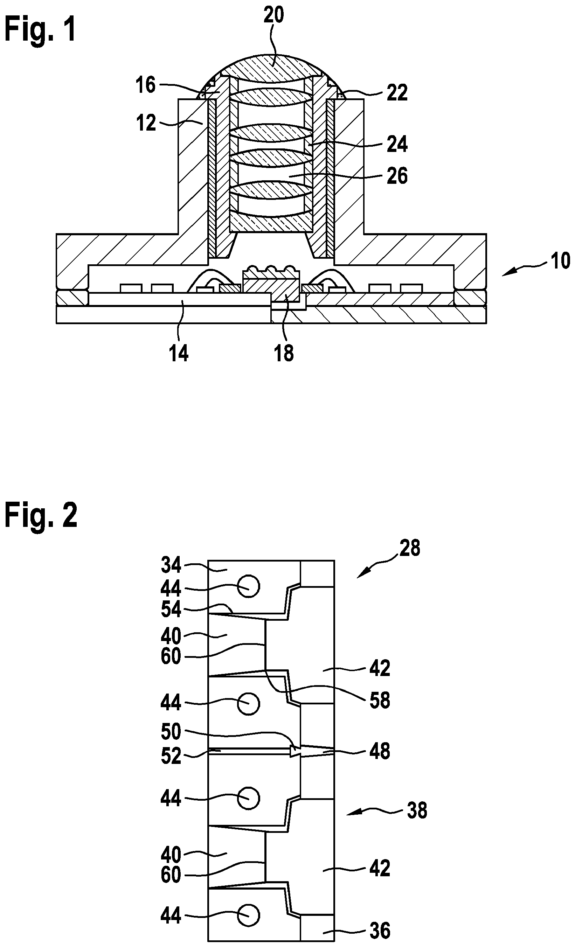

Figur 1 zeigt eine aktuelle Kamerabaugruppe 10, die einen Optikträger 12 umfasst. Der Optikträger 12 befindet sich oberhalb eines Schaltungsträgers 14. Im Optikträger 12 ist ein Objektiv 16 aufgenommen, der Schaltungsträger 14 umfasst einen schematisch dargestellten Bildaufnehmer 18, der unterhalb einer Anzahl von Linsen 20 liegt. Eine Linse 20 ist mittels einer Klebenaht 22 mit dem Optikträger 12 verbunden. Zwischen den einzelnen Linsen 20 befindet sich im Objektiv 16 ein Abstandhalter 24. Zwischen den einzelnen Linsen 20 sind Luftzwischenräume 26 ausgebildet.

### Ausführungsvarianten der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

Der Darstellung gemäß Figur 2 ist eine Prinzipskizze eines Mehrkavitätenspritzgießwerkzeugs 28 zu entnehmen.

Figur 2 zeigt ein Mehrkavitätenspritzgießwerkzeug 28, das mehrere Kavitäten, eine erste Kavität 30 und eine zweite Kavität 32 aufweist und eine erste Werkzeughälfte 34 sowie eine zweite Werkzeughälfte 36 umfasst. In der ersten Werkzeughälfte 34 sind beispielsweise Temperierungen 44 aufgenommen, welche den Spritzgießprozess in vorteilhafter Weise beeinflussen. Im Mehrkavitätenspritzgießwerkzeug 28 befinden sich in der Darstellung gemäß Figur 2 übereinanderliegende Formeinsätze 38. Ein jeder der Formeinsätze 38 umfasst eine Formeinsatzhälfte 40 auswerferseitig, sowie eine Formeinsatzhälfte 42 düsenseitig. Die beiden Formeinsatzhälften 40, 42 sind entformbar, d. h. entlang einer Trennebene 60 durch eine hier nicht näher dargestellte Mechanik auseinanderfahrbar, sodass ein hergestelltes Spritzgießbauteil aus dem Mehrkavitätenspritzgießwerkzeug 28 entformt werden kann.

Aus Figur 2 geht hervor, dass in den von den jeweiligen Werkzeughälften 34, 36 des Mehrkavitätenspritzgießwerkzeugs 28 begrenzten Kavitäten 30, 32 Kameragehäuse 46 hergestellt werden. Das Kunststoffmaterial, bei dem es sich beispielsweise um ein mit wärmeleitfähigen Partikeln gefüllten Thermoplasten oder um einen mit wärmeleitfähigen Partikeln gefüllten Duroplasten handelt, wird über einen Anguss 48 in die Kavitäten 30, 32 eingespritzt, sodass die Kameragehäuse 46 aus diesem Kunststoffmaterial entsprechend der Formgebung der Kavität 30, 32 abgeformt werden. Dem Anguss 48 gegenüberliegend befindet sich ein Rückhalter 50 sowie ein Auswerfer 52.

Aus der Darstellung gemäß Figur 2 geht hervor, dass die im Wege des Kunststoffspritzgießverfahrens hergestellten Kameragehäuse 46 mit bereits bei der Abformung im Mehrkavitätenspritzgießwerkzeug 28 gemäß Figur 2 eine erste Linsenelementauflage 54, eine zweite Linsenelementauflage 56 sowie eine dritte Linsenelementauflage 58 aufweisen. In diesen erfolgt in einem gemäß Verfahrensschritt c) das Einlegen von Linsenelementen 74, 78, 80 bei Anlage eines Vakuums 100.

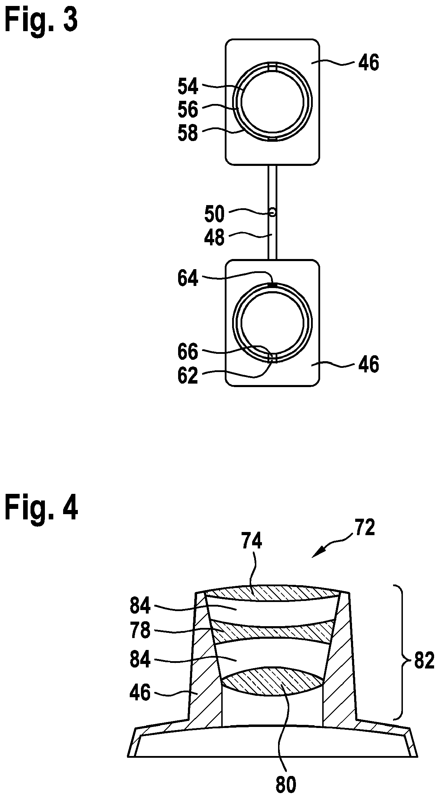

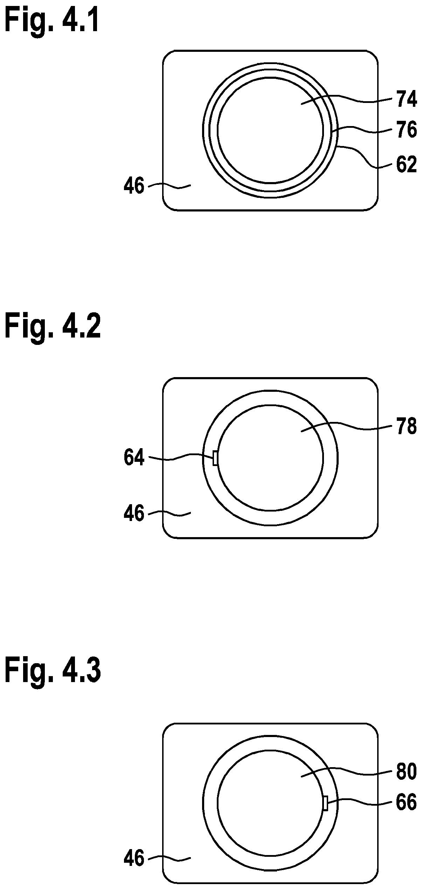

Figur 3 zeigt die durch den Anguss 48 miteinander verbundenen entformten Kameragehäuse 46. An den beiden Kameragehäusen 46 gemäß der Darstellung in Figur 3, die durch den Anguss 48 miteinander verbunden sind, ist die erste Linsenelementauflage 54 sowie die zweite Linsenelementauflage 56 zu erkennen. Des Weiteren sind in den Kameragehäusen 46 gemäß Figur 3 ein Anschnitt 1 vgl. Position 62 sowie ein Anschnitt 2 vgl. Position 64 ausgeführt, ebenso wie ein Überlauf 66. Über den in den erhaltenen Kameragehäusen 46 angeformten Anschnitt 1 vgl. 62 und Anschnitt 2 vgl. Position 64 erfolgt eine Befüllung von Luftzwischenräumen 84 innerhalb eines mit Linsenelementen 74, 78, 80 bestückten Kameragehäuses 72, vgl. Darstellung gemäß Figur 4.

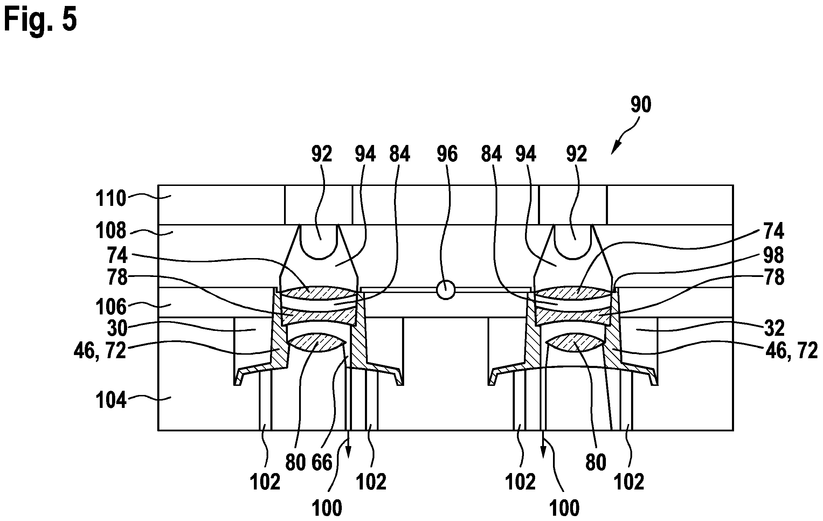

Der Darstellung gemäß Figur 4 ist ein bestücktes Kameragehäuse 46, 72 zu entnehmen. Das aus dem Mehrkavitätenspritzgießwerkzeug 28 erhaltene Kameragehäuse 46 weist bereits die erwähnte erste Linsenelementauflage 54, die zweite Linsenelementauflage 56 sowie die dritte Linsenelementauflage 58 auf. In das entformte Kameragehäuse 46 wird zunächst ein drittes Linsenelement 80 eingelegt, in deren dritter Linsenelementauflage 58 ein Überlauf 66 mündet, vgl. Darstellung gemäß Figur 3. In die im spritzgegossenen Kameragehäuse 46 darüber liegende zweite Linsenelementauflage 56 erfolgt das Einlegen des zweiten Linsenelements 78, welches beispielsweise eine konkave Form haben kann. Zwischen dem ersten Linsenelement 74 und dem zweiten Linsenelement 78 bildet sich ein Luftzwischenraum 84. Schließlich wird das Kameragehäuse 46 dadurch komplettiert, dass auf die erste Linsenelementauflage 54 am oberen Ende des Kameragehäuses 46 das erste Linsenelement 74 aufgelegt wird. Dadurch wiederrum bildet sich zwischen dem ersten Linsenelement 74 und dem zweiten Linsenelement 78 ein weiterer Luftzwischenraum 84. Die Luftzwischenräume 84 sind durch den Anschnitt 1, vgl. Position 62 gemäß Figur 4.1 sowie den Anschnitt 2 vgl. Position 64 in Figur 2 miteinander verbunden. Über die erwähnten Anschnitte 62, 64 fließt der die Luftzwischenräume 84 ausfüllende optische Kunststoff, wie nachfolgend in Figur 5 näher beschrieben wird, ein. Der bestückte Optikträger 12, an dem das erste Linsenelement 74, das zweite Linsenelement 78 sowie das dritte Linsenelement 80 in Schichtanordnung 82 aufgenommen sind, wird in Kavitäten 30, 32 eines in Figur 5 in schematischer Weise dargestellten UV-Spritzgießwerkzeugs 90 positioniert. In den Kavitäten 30, 32, welche die Werkzeugebenen 104, 106, 108, 110 durchsetzen, liegt ein Vakuum 100 an. Durch dieses Vakuum 100 werden die einzelnen Linsenelemente 74, 78, 80 in ihren Linsenelementauflagen 54, 56, 58 im spritzgegossenen Kameragehäuse 46 fixiert.

Nach dem Positionieren der einzelnen bestückten Kameragehäuse 72 in den Kavitäten 30, 32 des UV-Spritzgießwerkzeugs 90 werden die Kavitäten 30, 32 beziehungsweise die in diesen befindlichen bestückten Kameragehäuse 72 über einen Dosierkanal 96 mit einem optischen Kunststoff, bei dem es sich bevorzugt um einen UV-vernetzenden Kunststoff 98 handelt, beaufschlagt. Bei diesem optischen Kunststoff kann es sich beispielsweise um ein UV-vernetzendes Acryl- oder Epoxidharz KATIBOND von Fa. DELO mit einem Brechungsindex von n = 1,26 handeln.

Die auf den einzelnen Linsenelementauflagen 54, 56, 58 positionierten Linsenelemente 74, 78, 80 werden aus einem kostengünstigen Werkstoff wie beispielsweise Cycloolefin-Copolymere (COC) oder Cycloolefin-Polymere (COP), mit einem Brechungsindex von n = 1,53 oder aus Polycarbonat (PC) mit einem Brechungsindex von n = 1,58 hergestellt. Der fließfähige niedrigviskose Kunststoff, ein UV-vernetzender Kunststoff 98, wird über den hier zwischen der ersten und der zweiten Werkzeugebene 104, 106 und der dritten Werkzeugebene 108 des UV-Spritzgießwerkzeugs 90 verlaufenden Dosierkanal 96 eingespritzt. Dies erfolgt zunächst in den Luftzwischenraum 84, der zwischen dem ersten Linsenelement 74 und dem zweiten Linsenelement 78 liegt. Nachdem dieser Luftzwischenraum 84 gefüllt ist, fließt der niedrigviskose UV-vernetzende Kunststoff 98 über den Anschnitt 2 ein, vgl. Position 64 in Figur 2, und den darunter liegenden Luftzwischenraum 84, der zwischen dem zweiten Linsenelement 78 und dem dritten Linsenelement 80 liegt. Nachdem dieser Luftzwischenraum 84 befüllt ist, wird überschüssiges Material, d. h. UV-vernetzender Kunststoff 98 über das nach wie vor anliegende Vakuum 100 abgezogen. Bezugszeichen 76 in Figur 4.1 bezeichnet eine erzeugte Klebefixierung.

Danach erfolgt das Einschalten der UV-Lichtquellen 92 zur Aushärtung des die Luftzwischenräume 84 ausfüllenden UV-vernetzenden Kunststoffs 98. Wie aus der Darstellung gemäß Figur 5 hervorgeht, befinden sich dazu innerhalb der dritten Werkzeugebene 108 jeweils unterhalb der UV-Lichtquellen 92 transparente Formeinsätze 94. Diese sind so geformt, dass deren den bestückten Kameragehäusen 72 zuweisenden Seite eine Rundung aufweist, welche korrespondierend zur Rundung des ersten Linsenelements 74 ausgebildet ist. In der Darstellung gemäß Figur 5 sind die transparenten Formeinsätze 94 beispielsweise konkav gewölbt, da die dem transparenten Formeinsatz 94 zuweisende Seite des ersten Linsenelements 74 eine konvexe Krümmung aufweist.

Durch die transparenten Formeinsätze 94, die sich durch die dritte Werkzeugebene 108 erstrecken, kann nach dem Schließen des UV-Spritzgießwerkzeugs 90, d. h. nach Zusammenfahren der Werkzeugebenen 104, 106, 108, 110 eine formgenaue Abdichtung erreicht werden. Auswerfer 102 erleichtern die Entnahme des Bauteils nach Öffnen der Werkzeugebenen 104, 106, 108, 110.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung eines Kameragehäuses (46) mit in einer Schichtanordnung (82) angeordneten Linsenelementen (74, 78, 80) mit nachfolgenden Verfahrensschritten:
a) Abformung mindestens eines Kameragehäuses (46) in einem ersten Mehrkavitätenspritzgießwerkzeug (28),
b) Einsetzen der gemäß Verfahrensschritt a) erhaltenen Kameragehäuse (46) in Kavitäten (30, 32) eines weiteren UV-Spritzgießwerkzeugs (90) und Anlegen eines Vakuums (100) an die Kavitäten (30, 32),
c) Einlegen von Linsenelementen (74, 78, 80) in die Kameragehäuse (46) und Fixieren mittels des anliegenden Vakuums (100),
d) Einspritzen eines fließfähigen, niedrigviskosen UV-vernetzenden Kunststoffs (98) in Luftzwischenräume (84) der mit den Linsenelementen (74, 78, 80) bestückten Kameragehäuse (46, 72) und
e) Einschalten von UV-Lichtquellen (92) zur Aushärtung des die Luftzwischenräume (84) ausfüllenden UV-vernetzenden Kunststoffs (98)

2. Verfahren gemäß Anspruch 1, **dadurch gekennzeichnet, dass** gemäß Verfahrensschritt a) in den Kameragehäusen (46) Linsenelementauflagen (54, 56, 58) zur Aufnahme der Linsenelemente (74, 78, 80) abgeformt werden.

3. Verfahren gemäß Anspruch 1, **dadurch gekennzeichnet, dass** als Kunststoffmaterial für die Abformung der Kameragehäuse (46) ein mit wärmeleitfähigen Partikeln gefüllter Thermoplast, ein mit wärmeleitfähigen Partikeln gefüllter Duroplast oder gegossenes Metall eingesetzt wird.

4. Verfahren gemäß Anspruch 1, **dadurch gekennzeichnet, dass** gemäß Verfahrensschritt a) in den Kameragehäusen (46) Anschnitte (62, 64) geformt werden, die eine Befüllung von Luftzwischenräumen (84) mit UV-vernetzendem Kunststoff (98) gemäß Verfahrensschritt d) ermöglichen.

5. Verfahren gemäß Anspruch 1, **dadurch gekennzeichnet, dass** die gemäß Verfahrensschritt c) eingesetzten Linsenelemente (74, 78, 80) konkav oder konvex ausgeführt werden.

6. Verfahren gemäß Anspruch 1, **dadurch gekennzeichnet, dass** die gemäß Verfahrensschritt c) eingesetzten Linsenelemente (74, 78, 80) aus Cycloolefin-Copolymeren (COC) oder Cycloolefin-Polymeren (COP) insbesondere mit einem Brechungsindex von n = 1,53 oder einem Polycarbonat (PC) insbesondere mit einem Brechungsindex von n = 1,58 oder Polymethylmethacrylat, Glas oder Silikon hergestellt werden.

7. Verfahren gemäß Anspruch 1, **dadurch gekennzeichnet, dass** gemäß Verfahrensschritt d) als UV-vernetzender Kunststoff (98) ein optischer Kunststoff eingesetzt wird, insbesondere ein UV-vernetzendes Acryl- oder Epoxidharz weiter insbesondere mit einem Brechungsindex von n = 1,26.

8. Verfahren gemäß Anspruch 1, **dadurch gekennzeichnet, dass** gemäß Verfahrensschritt d) über einen Dosierkanal (96) in einer Werkzeugebene (104, 106, 108, 110) des UV-Spritzgießwerkzeugs (90) der UV-vernetzende Kunststoff (98) zuerst in Luftzwischenräume (84) unterhalb des ersten Linsenelements (74) und von dort über Anschnitte (62, 64) in weitere Luftzwischenräume (84) des bestückten Kameragehäuses (46, 72) überströmt.

9. Verfahren gemäß Anspruch 1, **dadurch gekennzeichnet, dass** gemäß Verfahrensschritt e) die Aushärtung des UV-vernetzenden Kunststoffs (98) ausgehend von der UV-Lichtquelle (92) über transparente Formeinsätze (94) erfolgt.

10. Verwendung des Verfahrens gemäß einem der vorstehenden Ansprüche zur Herstellung eines Kameragehäuses (46) mit in Schichtanordnung (82) vorgesehenen Linsenelementen (74, 78, 80) für Kameras im Innen- und Außenbereich von Fahrzeugen.

## Claims

1. Method of producing a camera housing (46) having lens elements (74, 78, 80) arranged in a layer arrangement (82), having the following method steps:
a) casting at least one camera housing (46) in a first multicavity injection mould (28),
b) inserting the camera housings (46) obtained in method step a) into cavities (30, 32) of a further UV injection mould (90) and applying a vacuum (100) to the cavities (30, 32),
c) placing lens elements (74, 78, 80) into the camera housings (46) and fixing by means of the vacuum applied (100),
d) injecting a free-flowing low-viscosity UV-crosslinking polymer (98) into air interstices (84) of the camera housings (46, 72) equipped with the lens elements (74, 78, 80) and
e) switching on UV light sources (92) for curing of the UV-crosslinking polymer (98) filling the air interstices (84).

2. Method according to Claim 1, **characterized in that**, in method step a), lens element rests (54, 56, 58) for accommodating the lens elements (74, 78, 80) are cast in the camera housings (46).

3. Method according to Claim 1, **characterized in that** the polymer material used for the casting of the camera housings (46) is a thermoplastic filled with thermally conductive particles, a thermoset filled with thermally conductive particles, or cast metal.

4. Method according to Claim 1, **characterized in that**, in method step a), gates (62, 64) that enable filling of air interstices (84) with UV-crosslinking polymer (98) in method step d) are formed in the camera housings (46).

5. Method according to Claim 1, **characterized in that** the lens elements (74, 78, 80) used in method step c) are in concave or convex form.

6. Method according to Claim 1, **characterized in that** the lens elements (74, 78, 80) used in method step c) are produced from cycloolefin copolymers (COC) or cycloolefin polymers (COP), especially having a refractive index of n = 1.53, or a polycarbonate (PC), especially having a refractive index of n = 1.58, or polymethylmethacrylate, glass or silicone.

7. Method according to Claim 1, **characterized in that**, in method step d), the UV-crosslinking polymer (98) used is an optical polymer, especially a UV-crosslinking acrylic resin or epoxy resin, more particularly having a refractive index of n = 1.26.

8. Method according to Claim 1, **characterized in that**, in method step d), via a runner (96) in a plane (104, 106, 108, 110) of the UV injection mould (90), the UV-crosslinking polymer (98) overflows first into air interstices (84) beneath the first lens element (74) and thence via gates (62, 64) into further air interstices (84) in the finished camera housing (46, 72) .

9. Method according to Claim 1, **characterized in that**, in method step e), the UV-crosslinking polymer (98) is cured proceeding from the UV light source (92) via transparent mould inserts (94).

10. Use of the method according to any of the preceding claims for production of a camera housing (46) having lens elements (74, 78, 80) provided in a layer arrangement (82) for cameras in the interior and exterior of vehicles.

## Revendications

1. Procédé de fabrication d'un boîtier de caméra (46) pourvu d'éléments de lentille (74, 78, 80) disposés dans une disposition par couches (82), comprenant les étapes de procédé suivantes consistant à :
a) mouler au moins un boîtier de caméra (46) dans un premier moule de moulage par injection à cavités multiples (28),
b) insérer les boîtiers de caméra (46) obtenu selon l'étape de procédé a) dans des cavités (30, 32) d'un autre moule de moulage par injection aux UV (90) et appliquer un vide (100) aux cavités (30, 32),
c) insérer des éléments de lentille (74, 78, 80) dans les boîtiers de caméra (46) et les fixer au moyen du vide appliqué (100),
d) injecter une matière synthétique coulante (98), de basse viscosité et réticulant aux UV, dans des lames d'air (84) des boîtiers de caméra (46, 72) équipé des éléments de lentille (74, 78, 80), et
e) mettre en marche des sources de lumière UV (92) pour faire durcir la matière synthétique réticulant aux UV (98) qui remplit les lames d'air (84).

2. Procédé selon la revendication 1, **caractérisé en ce que** selon l'étape de procédé a), des supports d'élément de lentille (54, 56, 58) pour recevoir les éléments de lentille (74, 78, 80) sont moulés dans les boîtiers de caméra (46).

3. Procédé selon la revendication 1, **caractérisé en ce qu'**un thermoplastique chargé de particules thermoconductrices, un plastique thermodurcissable chargé de particules thermoconductrices ou un métal coulé est utilisé comme matière synthétique pour le moulage des boîtiers de caméra (46).

4. Procédé selon la revendication 1, **caractérisé en ce que** selon l'étape de procédé a), dans les boîtiers de caméra (46), des points d'injection (62, 64) sont formés qui permettent un remplissage des lames d'air (84) avec une matière synthétique réticulant aux UV (98) selon l'étape de procédé d).

5. Procédé selon la revendication 1, **caractérisé en ce que** les éléments de lentille (74, 78, 80) insérés selon l'étape de procédé c) sont réalisés de manière concave ou convexe.

6. Procédé selon la revendication 1, **caractérisé en ce que** les éléments de lentille (74, 78, 80) insérés selon l'étape de procédé c) sont fabriqués en copolymères de cyclo-oléfine ou en polymères de cyclo-oléfine (COP), en particulier ayant un indice de réfraction de n = 1,53, ou en polycarbonate (PC), en particulier ayant un indice de réfraction de n = 1,58, ou en polyméthacrylate de méthyle, en verre ou en silicone.

7. Procédé selon la revendication 1, **caractérisé en ce que** selon l'étape de procédé d), une matière synthétique optique est mise en œuvre comme matière synthétique réticulant aux UV (98), en particulier une résine acrylique ou époxy réticulant aux UV, ayant en outre en particulier un indice de réfraction de n = 1,26.

8. Procédé selon la revendication 1, **caractérisé en ce que** selon l'étape de procédé d), en passant par un canal de dosage (96) dans un plan de moule (104, 106, 108, 110) du moule de moulage par injection aux UV (90), la matière synthétique réticulant aux UV (98) s'écoule d'abord dans les lames d'air (84) au-dessous du premier élément de lentille (74) et de là par les points d'injection (62, 64) dans d'autres lames d'air (84) du boîtier de caméra (46, 72) équipé.

9. Procédé selon la revendication 1, **caractérisé en ce que** selon l'étape de procédé e) le durcissement de la matière synthétique réticulant aux UV (98) est effectué à partir de la source de lumière UV (92) par l'intermédiaire d'inserts de moule transparents (94).

10. Utilisation du procédé selon l'une quelconque des revendications précédentes pour fabriquer un boîtier de caméra (46) pourvu d'éléments de lentille (74, 78, 80) prévus dans une disposition par couches (82) pour des caméras à l'intérieur et à l'extérieur de véhicules.
